# FASCICULE DE BREVET EUROPEEN

(11) **EP 1 051 907 B1**
(45) Date de publication et mention de la délivrance du brevet: **04.08.2004**
(21) Numéro de dépôt: 00401275.3
(22) Date de dépôt: 10.05.2000
(51) Int. Cl.: A01N 1/02, A61K 35/52

(54) **Dilueur pour la cryoconservation de spermatozoides de bovins**
Verdüner zur Kryokonservierung von Rindersperma
Extender for cryopreserving bovine sperm

(30) Priorité: 14.05.1999 FR 9906177
(43) Date de publication de la demande: 15.11.2000
(73) Titulaire: IMV Technologies, 61300 L'Aigle (FR)
(72) Inventeur: Saint-Ramon, Jean-Gérard, 61300 l'Aigle (FR); Desherces, Serge, 16430 Vindelle (FR); Decuadro-Hansen, Gustavo, 61550 Gauville (FR)
(74) Mandataire: Santarelli

(56) Documents cités:
- EP-A- 0 685 556
- DATABASE WPI Section Ch, Week 198621 Derwent Publications Ltd., London, GB; Class B07, AN 1986-136551 XP002132085 & SU 1 189 448 A (UKR HORNED CATTLE), 7 novembre 1985 (1985-11-07)
- L.G. S NCHEZ-PARTIDA ET AL.: "EPIDIDYMAL COMPOUNDS AND ANTIOXYDANTS IN DILUENTS FOR THE FROZEN STORAGE OF RAM SPERMATOZOA." REPRODUCTION, FERTILITY AND DEVELOPMENT, vol. 9, no. 7, 1997, pages 689-696, XP000877308 MELBOURNE, AU
- DATABASE BIOSIS [en ligne] BIOSCIENCES INFORMATION SERVICE, PHILADELPHIA, PA, US; août 1998 (1998-08) OLLERO M ET AL: "Improvement of ram sperm cryopreservation protocols assessed by sperm quality parameters and heterogeneity analysis." Database accession no. PREV199800410537 XP002132084 & CRYOBIOLOGY AUG., 1998, vol. 37, no. 1, août 1998 (1998-08), pages 1-12, ISSN: 0011-2240
- AL-HANAK H. ET AL ZHIVOTNOV'DNI NAUKI vol. 26, no. 5, 1989, pages 80 - 83

## Description

L'invention se rapporte à un dilueur pour la cryoconservation de spermatozoïdes de bovins. Plus précisément, l'invention concerne un milieu dilueur aqueux ne contenant pas de substances d'origine animale et susceptible d'être conservé prêt à l'emploi sur des périodes prolongées.

On connaît des dilueurs pour la cryoconservation de spermatozoïdes de bovins. Le FR-B-2 720 407 de la Demanderesse décrit un tel dilueur qui contient des agents de nutrition, des tampons et des sels minéraux ainsi qu'un produit protecteur constitué de lécithine de soja.

Il est également connu d'après Al-hanak et al., 1989, Zhivotnov'dni Nanki, 26(5): 80-83, que l'adjonction de produits d'origine animale, contenant de la vitamine A, en particulier du jaune d'oeuf, exerce une influence favorable sur les indices de qualité des spermatozoïdes.

Le dilueur décrit dans le brevet précité est destiné à diluer de la semence bovine et à la congeler pour une utilisation ultérieure. C'est une démarche essentiellement "sanitaire". Ce dilueur donne une relative satisfaction.

Il est facile à préparer, et est très clair. L'absence de produits d'origine animale garantit l'absence de tout agent d'infection.

Cependant, la question de l'efficacité biologique du produit n'avait pas été soulevée. L'efficacité dans les gammes de concentration utilisées auparavant ne permet pas de travailler avec la souplesse que l'on doit avoir dans un centre d'insémination.

En effet, à présent on désire optimiser la production de semence, c'est-à-dire, on souhaite produire un nombre important de doses avec une concentration minimale de spermatozoïdes dans une paillette.

Dans des tests in vivo, avec une concentration très basse de spermatozoïdes dans la paillette, la performance du dilueur du FR-B-2 720 407 n'a pas été excellente.

L'article de L. G. Sanchez-Partidaet al., Reprod Fertil. Dev., 1997, 9, 689-96, décrit des dilueurs pour spermatozoïdes de bélier, à base de tris contenant des concentrations variables de glycérol dans lesquels on a ajouté de la taurine, de l'hypotaurine et de l'inositol épididymales, ainsi que de la carnosine et de l'acide ascorbique.

L'article de M. Ollero et al. in Cryobiology 37,1-2, 1998, décrit l'effet sur les spermatozoïdes de bélier ayant subit un cycle de refroidissement, congélation, décongélation, de plusieurs dilueurs, parmi lesquels le milieu de Fiser auquel on a ajouté différents composants tels que la lactalbumine et l'albumine sérique bovine, la vitamine E, le dithiothreitol, le plasma séminal de taureau, la glycine bétaïne, la proline, la phosphatidylcholine et le cholestérol.

Un objet de la présente invention est de fournir un dilueur pour la cryoconservation de spermatozoïdes de bovins ayant des résultats in vivo améliorés.

Un autre objet de l'invention est de fournir un tel dilueur conduisant à une survie des spermatozoïdes satisfaisante à basse concentration.

La présente invention fournit un dilueur répondant aux objets ci-dessus.

Le dilueur pour la cryoconservation de spermatozoïdes de bovins de la présente invention comprend au moins un phospholipide, de la vitamine A accompagnée d'un émulsifiant, au moins un agent antioxydant et au moins un polyol.

La vitamine est accompagnée d'un émulsifiant, par exemple le monooléate de sorbitane commercialisé sous l'appellation Tween 80.

L'agent antioxydant peut être un acide aminé ayant des propriétés antioxydantes, par exemple, la taurine et la glycine.

L'agent antioxydant peut aussi être un peptide antioxydant, par exemple du glutation réduit.

Le dilueur de la présente invention peut contenir en outre un stérol, notamment du cholestérol.

Dans le cas où un stérol est présent dans le dilueur, celui-ci contiendra avantageusement des cyclodextrines qui le solubilisent en milieu aqueux.

Le dilueur de la présente invention peut également contenir en outre des sels et des carbohydrates.

Les carbohydrates sont par exemple le glucose, le fructose, le lactose.

Les sels sont notamment des tampons, par exemple la triméthylolméthylamine, ce tampon étant dénommé habituellement Tampon Tris ou, simplement, Tris.

Le dilueur de l'invention contient une dose efficace d'au moins un polyol apte à inhiber la formation de cristaux de glace. Le polyol sera avantageusement du glycérol.

Pour la préparation des dilueurs selon l'invention, on effectue les étapes suivantes:
a) préparation d'une dispersion d'au moins un phospholipide sous forme de particules dans au moins un polyol à une température suffisante;
b) agitation de la dispersion de l'étape a) de façon à microniser lesdites particules de phospholipide;
c) repos de la dispersion obtenue dans l'étape b) pendant une durée d'au moins environ 12 heures de façon à atteindre une stabilité de l'émulsion obtenue, c'est-à-dire sans séparation de phases, conduisant à une préparation, dénommée préparation de l'étape c);
d) préparation d'une phase aqueuse comprenant au moins un acide aminé ayant des propriétés antioxydantes, au moins un peptide antioxydant et de la vitamine A conduisant à une phase, dénommée phase aqueuse de l'étape d);
e) réunion de la préparation de l'étape c) et de la phase aqueuse de l'étape d), conduisant à une préparation, dénommée préparation de l'étape e);
f) stérilisation de la préparation de l'étape e).

Selon un mode de réalisation préféré de l'invention, la stérilisation de l'étape f) est effectuée par rayonnement ionisant dans une fourchette de dose d'irradiation d'environ 5 à environ 20 Kgy, de préférence d'environ 15 à environ 20 Kgy.

Parmi les techniques pour obtenir la dispersion de l'étape a), on peut utiliser des disperseurs mécaniques et des émulsionneurs qui agissent par voie de pression.

Pour obtenir une émulsion stable dans l'étape c), il est nécessaire de laisser reposer la dispersion pendant au moins 12 heures.

De préférence, le dilueur de l'invention est formulé avec une quantité d'eau réduite, et on le dilue pour l'emploi avec de l'eau stérile.

Au moment de son utilisation, le dilueur contient avantageusement un agent antibiotique. Toutefois, si l'agent antibiotique est ajouté au dilueur lors de sa préparation, il peut perdre son efficacité lors de l'étape de stérilisation.

Selon un mode de réalisation préféré de la présente invention, l'agent antibiotique est ajouté extratemporanément au moment de l'utilisation.

Dans ce mode de réalisation, le dilueur sans antibiotique est avantageusement contenu dans un récipient fermé par un bouchon. Par exemple, l'agent antibiotique sous forme de poudre est présent dans le bouchon et est libéré dans le dilueur en exerçant une pression sur ledit bouchon.

L'agent antibiotique est par exemple de la gentamycine sous forme de sulfate.

Typiquement, le dilueur de l'invention contiendra les phospholipides suivants dans les proportions pondérales indiquées ci-dessous:

"Lécithine 100" ayant les proportions pondérales indiquées des phospholipides suivants:
- phosphatidylcholine 20-24 %
- phosphatidyléthanalamine 18-22 %
- phosphatidylinositol 12-15 %

"Lécithine 130" ayant les proportions pondérales indiquées des phospholipides suivants:
- phosphatidyléthanolamine 14-20 %
- phosphatidylinositol 7-13 %
- phosphatidylcholine 30-35 %

La Lécithine 130 est en fait une lécithine enrichie en phosphatidylcholine.

Il faut noter que le dilueur de invention est destiné exclusivement à la cryoconservation de spermatozoïdes de bovins. Il n'est pas adapté pour la cryoconservation de spermatozoïdes d'autres espèces animales ou de l'espèce humaine.

Il est proposé un dilueur non illustratif de l'invention, qui comprend pour 100 ml d'eau:

| | |
|---|---|
| Tris | 1 à 2g |
| citrate trisodique dihydraté | 5 à 10 g |
| chlorure de potassium | 0,2 à 0,5 g |
| fructose | 0,6 1,0g |
| lactose monohydraté | 0,18 à 0,30 g |
| glycine | 2,0 à 3,0 g |
| glucose anhydre | 0,25 à 0,40 g |
| taurine | 0,0030 à 0,0040 g |
| sulfate de gentamycine | 0,20 g à 0,30 g |
| tartrate de tylosine | 0,028 à 0,040 g |
| lincospectine 100 | 0,30 à 0,35 g |
| glycérol | 30 à 45 g |
| lactate de calcium hydraté | 0,03 à 0,05 g |
| lécithine 100 | 2,0 à 3,0 g |
| lécithine 130 | 0,80 à 1,10 g |
| acide citrique monohydraté | 0,5 à 2 g |
| eau ultra pure | qsp |

### Exemple 1 (voir page suivante)

### Exemple 1

En suivant le mode opératoire décrit ci-dessus, on a formulé un dilueur ayant la composition suivante:

| | |
|---|---|
| Tris | 1,8490g |
| citrate trisodique dihydraté | 7,3965 g |
| chlorure de potassium | 0,2955 g |
| fructose | 0,8875 g |
| lactose monohydraté | 0,2220 g |
| glycine | 2,7735 g |
| glucose anhydre | 0,3695 g |
| taurine | 0,0037 g |
| sulfate de gentamycine | 0,2400 g |
| tartrate de tylosine | 0,0330 g |
| lincospectine 100 | 0,3830 g |
| glycérol | 40,2240 g |
| lactate de calcium hydraté | 0,0455 g |
| lécithine 100 | 2,6000 g |
| lécithine 130 | 1,0400 g |
| acide citrique monohydraté | 1,0400 g |
| eau ultra pure | 0,0650 l |

La formulation ci-dessus est effectuée pour obtenir 100 ml de dilueur concentré, ce dernier étant dilué à 500 ml pour l'utilisation.

### Exemple 2 : Essais comparatifs in vitro : Anomalies et test de résistance osmotique

Dans cet Exemple, le dilueur de l'Exemple 1 est comparé au dilueur de l'art antérieur décrit dans EP-A-685 556 en ce qui concerne les anomalies et la résistance osmotique in vitro.

En suivant le mode opératoire décrit dans EP-A-685 556, on a formulé un dilueur selon l'art antérieur ayant la composition suivante:

| | |
|---|---|
| Triméthylol-méthylamine | 3,4 g à 4,2 g |
| Citrate trisodique dihydraté | 13,7 g à 16,75 g |
| Chlorure de potassium | 0,55 g à 0,67 g |
| Fructose | 1,65 g à 2,0 g |
| Glucose | 0.68 g à 0,84 g |
| Lactose | 0.41 g à 0,50 g |
| Lactate de calcium | 0.09 g à 0,11g |
| Glycine | 5.15 g à 6,25 g |
| Glycérol | 64 ml à 78 ml |
| Lécithine de soja | 6.75 g à 8,25 g |

ce véhicule étant dilué, pour l'emploi, avec 750 ml à 900 ml d'eau.

Le Tableau I ci-après donne les résultats comparatifs du dilueur de l'art antérieur, DILUEUR A, et du dilueur de l'exemple 1, DILUEUR I, avec différents taureaux : NIZAGO, NOMEL, NORRIS, NOVAK, OCARINA et OKAVANGO.

**Tableau 1**

| **LIBELLE** | **% anom. majeures** | **% anormaux** | **HOST** |
|---|---|---|---|
| NIZAGO DILUEUR A | 12,0% | 23,5% | 51,24% |
| NIZAGO DILUEUR I | | | 65,05% |
| NOMEL DILUEUR A | 13,5% | 30,0% | 34,31% |
| NOMEL DILUEUR I | | | 54,50% |
| NORRIS DILUEUR A | 6,0% | 17,5% | 50,50% |
| NORRIS DILUEUR 1 | | | 53,00% |
| NOVAK DILUEUR A | 20,0% | 26,0% | 34,80% |
| NOVAK DILUEUR I | | | 47,71% |
| OCARINA DILUEUR A | 7,5% | 21,0% | 50,00% |
| OCARINA DILUEUR I | | | 47,76% |
| OKAVANGO DILUEUR A | 8,5% | 18,5% | 67,68% |
| OKAVANGO DILUEUR I | | | 67,65% |
| Résultats moyens DILUEUR A à 7.10⁶ spz/dose | 11,0% | 23,0% | 48,09% |
| Résultats moyens DILUEUR I à 7.10⁶ spz/dose | | | 55,95% |
| HOST = test de résistance osmotique | | | |
| Spz = spermatozoïdes | | | |

Le Tableau I indique clairement la supériorité du dilueur de l'exemple 1 sur le dilueur de l'art antérieur car pour 7.10⁶ spermatozoïdes par dose, on obtient un pourcentage de résistance osmotique in vitro très supérieur pour le dilueur de l'exemple 1.

Bien que l'invention ait été décrite pour des modes de réalisation particuliers, on comprendra qu'elle embrasse toutes les variantes d'exécution dans le cadre des revendications.

## Revendications

1. Dilueur pour la cryoconservation de spermatozoïdes de bovins comprenant au moins un phospholipide, de la vitamine A accompagnée d'un émulsifiant, au moins un agent antioxydant et au moins un polyol, ledit dilueur ne contenant pas de substances d'origine animale.

2. Dilueur selon la revendication 1, **caractérisé en ce que** l'agent antioxydant est un acide aminé ayant des propriétés antioxydantes.

3. Dilueur selon la revendication 1, **caractérisé en ce que** l'agent antioxydant est un peptide antioxydant.

4. Dilueur selon la revendication 2, **caractérisé en ce que** l'acide aminé ayant des propriétés antioxydantes est la taurine.

5. Dilueur selon la revendication 3, **caractérisé en ce que** le peptide antioxydant est du glutation réduit.

6. Dilueur selon la revendication 1, **caractérisé en ce qu'**il contient en outre un stérol.

7. Dilueur selon la revendication 6, **caractérisé en ce que** le stérol est le cholestérol.

8. Dilueur selon l'une des revendications 6 et 7, **caractérisé en ce qu'**il contient en outre des cyclodextrines pour solubiliser le stérol.

9. Dilueur selon la revendication 1, **caractérisé en ce que** le polyol est du glycérol.

10. Dilueur selon la revendication 1, **caractérisé en ce qu'**il contient en outre des sels et des carbohydrates.

11. Procédé de préparation du dilueur selon la revendication 1, **caractérisé en ce que** l'on effectue les étapes suivantes :
a. préparation d'une dispersion d'au moins un phospholipide sous forme de particules dans au moins un polyol à une température suffisante,
b. agitation de la dispersion de l'étape a) de façon à microniser lesdites particules de phospholipide,
c. repos de la dispersion obtenue dans l'étape b) pendant une durée d'au moins environ 12 heures de façon à atteindre une stabilité de l'émulsion obtenue, c'est à dire sans séparation de phases, conduisant à une préparation, dénommée préparation de l'étape c),
d. préparation d'une phase aqueuse comprenant au moins un acide aminé ayant des propriétés antioxydantes, au moins un peptide antioxydant et de la vitamine A, conduisant à une phase, dénommée phase aqueuse de l'étape d),
e. réunion de la préparation de l'étape c) et de la phase aqueuse de l'étape d) conduisant à une préparation, dénommée préparation de l'étape e),
f. stérilisation de la préparation de l'étape e).

12. Procédé selon la revendication 11, **caractérisé en ce que** la stérilisation de l'étape f) est effectuée par rayonnement ionisant dans une fourchette de dose d'irradiation d'environ 5 à environ 20 Kgy.

13. Procédé selon la revendication 12, **caractérisé en ce que** la fourchette de dose d'irradiation est d'environ 15 à environ 20 Kgy.

14. Procédé selon la revendication 11,**caractérisé en ce qu'**un stérol est ajouté à la préparation de l'étape d).

15. Procédé selon la revendication 11, **caractérisé en ce que** des carbohydrates sont ajoutés à la préparation de l'étape d).

16. Utilisation d'un dilueur selon l'une des revendications 1 à 10 pour la cryoconservation de spermatozoïdes de bovins.

## Patentansprüche

1. Verdünner zur Kryokonservierung von Rinderspermatozoen, umfassend mindestens ein Phospholipid, Vitamin A, kombiniert mit einem Emulgator, mindestens ein Antioxidans und mindestens ein Polyol, wobei der Verdünner keine Substanzen tierischen Ursprungs enthält.

2. Verdünner nach Anspruch 1, **dadurch gekennzeichnet, dass** das Antioxidans eine Aminosäure, die Antioxidans-Eigenschaften hat, ist.

3. Verdünner nach Anspruch 1, **dadurch gekennzeichnet, dass** das Antioxidans ein Peptid-Antioxidans ist.

4. Verdünner nach Anspruch 1, **dadurch gekennzeichnet, dass** die Aminosäure mit Antioxidans-Eigenschaften Taurin ist.

5. Verdünner nach Anspruch 3, **dadurch gekennzeichnet, dass** das Peptid-Antioxidans reduziertes Glutathion ist.

6. Verdünner nach Anspruch 1, **dadurch gekennzeichnet, dass** er außerdem ein Sterol enthält.

7. Verdünner nach Anspruch 6, **dadurch gekennzeichnet, dass** das Sterol Cholesterol ist.

8. Verdünner nach Anspruch 6 oder Anspruch 7, **dadurch gekennzeichnet, dass** er außerdem Cyclodextrine enthält, um das Sterol zu solubilisieren.

9. Verdünner nach Anspruch 1, **dadurch gekennzeichnet, dass** das Polyol Glycerin ist.

10. Verdünner nach Anspruch 1, **dadurch gekennzeichnet, dass** er außerdem Salze und Kohlenhydrate enthält.

11. Verfahren zur Herstellung des Verdünners nach Anspruch 1, **dadurch gekennzeichnet, dass** man die folgenden Stufen durchführt:
a) Herstellung einer Dispersion mindestens eines Phospholipids in Form von Partikeln in mindestens einem Polyol bei ausreichender Temperatur,
b) Rühren der Dispersion der Stufe a) derart, dass die Phospholipidpartikel mikronisiert werden,
c) Ruhenlassen der in Stufe b) erhaltenen Dispersion für eine Zeitdauer von mindestens etwa 12 Stunden derart, dass eine Stabilität der erhaltenen Emulsion erzielt wird, d.h. ohne Phasentrennung, was zu einer Präparation führt, die Präparation der Stufe c) genannt wird,
d) Herstellung einer wässrigen Phase, die mindestens eine Aminosäure mit Antioxidans-Eigenschaften, mindestens ein Peptid-Antioxidans und Vitamin A umfasst, was zu einer Phase führt, die als wässrige Phase der Stufe d) bezeichnet wird,
e) Vereinigung der Präparation der Stufe c) und der wässrigen Phase der Stufe d), was zu einer Präparation führt, die als Präparation der Stufe e) bezeichnet wird,
f) Sterilisation der Präparation der Stufe e).

12. Verfahren nach Anspruch 11, **dadurch gekennzeichnet, dass** die Sterilisation der Stufe f) durch ionisierende Strahlung in einer Spanne der Bestrahlungsdosis von etwa 5 bis etwa 20 Kgy durchgeführt wird.

13. Verfahren nach Anspruch 12, **dadurch gekennzeichnet, dass** die Spanne der Bestrahlungsdosis von etwa 15 bis etwa 20 Kgy reicht.

14. Verfahren nach Anspruch 11, **dadurch gekennzeichnet, dass** der Präparation der Stufe d) ein Sterol zugesetzt wird.

15. Verfahren nach Anspruch 11, **dadurch gekennzeichnet, dass** der Präparation der Stufe d) Kohlenhydrate zugesetzt werden.

16. Verwendung eines Verdünners nach einem der Ansprüche 1 bis 10 zur Kryokonservierung von Rinderspermatozoen.

## Claims

1. A diluent for cryogenic storage of bovine spermatozoa, including at least one phospholipid, vitamin A accompanied by an emulsifier, at least one antioxidant and at least one polyol, said diluent comprising no substances of animal origin.

2. A diluent according to claim 1 **characterized in that** the antioxidant is an amino acid with antioxidant properties.

3. A diluent according to claim 1 **characterized in that** the antioxidant is an antioxidant peptide.

4. A diluent according to claim 2 **characterized in that** the amino acid with antioxidant properties is taurine.

5. A diluent according to claim 3 **characterized in that** the antioxidant peptide is reduced glutathione.

6. A diluent according to claim 1 **characterized in that** it further includes a sterol.

7. A diluent according to claim 6 **characterized in that** the sterol is cholesterol.

8. A diluent according to either of claims 6 and 7 **characterized in that** it further includes cyclodextrins to solubilize sterol.

9. A diluent according to claim 1 **characterized in that** the polyol is glycerol.

10. A diluent according to claim 1 **characterized in that** it further includes salts and carbohydrates.

11. A process for preparing the diluent according to claim 1, **characterized in that** the following steps are carried out:
a) preparing a dispersion of at least one phospholipid in the form of particles in at least one polyol at a sufficient temperature;
b) stirring the dispersion from step a) to micronize said phospholipid particles;
c) leaving the dispersion obtained in step b) to stand for a period of at least about 12 hours to stabilize the emulsion obtained, i.e. to assure no separation of phases, yielding a preparation referred to as the preparation from step c),
d) preparing an aqueous phase including at least one amino acid with antioxidant properties, at least one antioxidant peptide and vitamin A, yielding a phase referred to as the aqueous phase from step d),
e) combining the preparation from step c) and the aqueous phase from step d), yielding a preparation referred to as the preparation from step e), and
f) sterilizing the preparation from step e).

12. A process according to claim 11 **characterized in that** the sterilization in step f) is carried out by ionizing radiation in an irradiation dose range from about 5 Kgy to about 20 Kgy.

13. A process according to claim 12 **characterized in that** the irradiation dose range is from about 15 Kgy to about 20 Kgy.

14. A process according to claim 11 **characterized in that** a sterol is added to the preparation from step d).

15. A process according to claim 11 **characterized in that** carbohydrates are added to the preparation from step d).

16. The use of a diluent according to one of claims 1 to 10 for the cryogenic storage of bovine spermatozoa.
